# EUROPEAN PATENT SPECIFICATION

(11) **EP 0 513 377 B1**
(45) Date of publication and mention of the grant of the patent: **26.04.1995**
(21) Application number: 91920697.9
(22) Date of filing: 30.11.1991
(51) Int. Cl.: B23H 7/02

(54) **CORE TREATING APPARATUS AND METHOD**
VERFAHREN UND VORRICHTUNG ZUM BEARBEITEN EINES KERNS
PROCEDE ET APPAREIL DE TRAITEMENT D'UN NOYAU

(30) Priority: 30.11.1990 JP 337763/90
(43) Date of publication of application: 19.11.1992
(73) Proprietor: SODICK CO., LTD., Yokohama-shi, Kanagawa 222 (JP)
(72) Inventor: HAYAKAWA, Jyun, Japax Inc. Technical Center, Yokohama-shi Kanagawa 227 (JP)
(74) Representative: AMMANN PATENTANWAELTE AG BERN
(86) International application number: PCT/JP91/01678
(87) International publication number: WO 92/09396

(56) References cited:
- JP-A-57 149 119
- JP-A-58 094 921
- JP-A-61 109 617
- JP-A-63 022 220

## Description

This invention generally relates to a corepiece handling apparatus and, more particularly, to a corepiece handling apparatus for use in a wire-cut electroerosion machine for maintaining the position of the corepiece while the corepiece is being cut away from a workpiece and then for automatically removing the corepiece from the workpiece and the working zone. The invention also relates to a method for handling corepieces.

### Description of Prior Art

Typically, to machine a contour in a workpiece with a wire-cut electroerosion machine and specifically a wire-cut electric discharge machine ("EDM"), a hole is first created in the workpiece. A wire electrode is passed through the hole and a machining fluid is flushed into the gap formed between the wire electrode and the workpiece (i.e., the working zone.) Machining of the workpiece with electric discharges is accomplished by applying an intermittent voltage at the gap. Under the control of a numerical controller, the wire electrode and the workpiece are moved relative to each other to create the desired contour.

When the machining progresses close to the point where the corepiece is about to be cut free of the workpiece, the corepiece is vibrated in order to displace it from the other part of the workpiece. Because the wire electrode is positioned between the workpiece and the corepiece, the wire electrode tends to become short circuited as the corepiece falls away from the workpiece. Consequently, machining is interrupted.

In order to prevent the wire electrode from being shorted circuited, the corepiece must be held immobile while it is machined away from the workpiece. When a position determining guide, which guides the wire electrode through the working zone, is displaced away from the workpiece (while the position of the corepiece is maintained), machining precision may be reduced, especially when taper-cut machining is being performed. Therefore, when fixing the position of the corepiece, it is desirable not to move up the wire guide block having the position determining guide inside away from the workpiece surface so that the fixing of the position of the corepiece is not interrupted.

Also, when unmanned machining is performed over a long period of time, it may be desirable to perform a second cut after the corepiece has been removed from the workpiece. When multiple corepieces are cut from a single workpiece, machining must stop before each corepiece is cut, then the corepiece is completely cut out of the workpiece and transferred to a special location, and then machining restarted to cut the next contour.

Several corepiece handling devices according to the preamble of claim 1 have been devised to maintain the corepiece against the workpiece or to transfer the corepiece to a special location after the corepiece has been cut from the workpiece. For example, Japanese Patent Publication No. 61-109617 discloses that after fixing a ring-shaped electromagnet around a nozzle device, the electromagnet can be excited, and a corepiece comprised of a magnetic material, will become attached to the electromagnet. When the current to the electromagnet is cut off, the corepiece will be detached from the electromagnet.

However, when wire-cut electric discharge machining is performed, the size of the corepiece cut away from the workpiece often varies. The electromagnet holder is screwed into the guide block and its periphery surrounds the nozzle tip. The electromagnet, which attracts the corepiece via a ball bearing, should be replaced according to the size of the core. The replacement, however, is complicated and causes a decrease in efficiency. Further, completely automatic machining becomes impossible.

Japanese Patent Publication No. 62-38095 discloses an apparatus which can fix the position of both the cut away corepiece and the workpiece. Several permanent magnets, which are installed into a substrate, are freely attachable and removable from the tip of the machining head. Removal is accomplished by creating a current in an arbitrary desired permanent magnet to a coil from a controller. However, the apparatus for removing the corepiece with the machining head is large.

### SUMMARY OF THE INVENTION

It is an object of the present invention to provide a corepiece handling method and apparatus which are capable of simply and easily handling corepieces of varying sizes.

It is another object of the present invention to provide a corepiece handling method and apparatus which can operate automatically and with a high efficiency.

It is yet another object of the present invention to provide a corepiece handling method and apparatus which maintain the position of the corepiece relative to the workpiece and an apparatus which does not have to be displaced when the position of the position determining guide changes.

It is still a further object of the present invention to provide a corepiece handling method and apparatus which can maintain the position of the corepiece relative to the workpiece, remove the corepiece from the workpiece, and transfer the corepiece to a special location in a simple manner.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

The foregoing and other objects are achieved in accordance with the caracterizing part of claim 1.

The first holder (holding means) may be magnetized, removed from the second holder, and then placed on the workpiece so as to straddle a workpiece and a corepiece. The first holder maintains the position of the corepiece fixed relative to the workpiece while the corepiece is being cut away and also prevents the corepiece from dropping away from the workpiece when the corepiece is cut free.

The treatment of the corepiece may vary in accordance with the size of the corepiece. For example, when the size of the corepiece is relatively small, after attaching the first holder to the second holder, the corepiece, which is attached to the first holder, can be removed from the workpiece by raising and moving the first and second holders. The corepiece may be then transferred to a special location at which point the first holder may be removed. When the size of the corepiece is relatively large, the corepiece may be transferred from the machining location by a pallet changer while the first holder maintains the position of the corepiece relative to the workpiece.

According to another aspect of the invention, machining fluid is sprayed and supplied to the machining gap from the wire guide block through the hollow portions of the first and second holders. After the first holder is attached to the second holder, the common axis of the first and second holders may comprise a discharge gate of a nozzle for the machining fluid fitting.

In accordance with another aspect of the invention, an electromagnet is used as the first and second holders. The electromagnet forming the first holder may hold, remove, and maintain the position of the core easily by energizing and deenergizing the first holder. Thus, the core treatment operation may be performed rapidly and stably.

The first holder may comprise a ring-shaped permanent magnet with a coil wound around its periphery. By energizing or deenergizing the coil, the first holder becomes magnetized or demagnetized. The first holder also comprises a connector for linking the coil to a power source for the magnetization and demagnetization. Also, the second holder may comprise a device which uses a vacuum for holding the first holder.

According to a further aspect of the invention, the first holder may comprise several holders which are sized according to the varying sizes of corepieces. An automatic exchanger may load and remove the first holders in order to adapt the first holder to the size of the corepiece. Also, while the corepiece is transferred with its position maintained by an electromagnet, a different electromagnet, which corresponds in size to that of the next corepiece to be machined from the workpiece, may then be attached to the second holder.

### BRIEF DESCRIPTION OF THE DRAWINGS

The accompanying drawings, which are incorporated in, and form a part of the specification, illustrate embodiments of the present invention and, together with the description, serve to explain the principles of the invention. In the drawings:
Fig. 1 illustrates a wire-cut EDM machine with an embodiment of a core treatment apparatus;
Fig. 2 is an enlarged vertical cross-sectional view of the embodiment of Fig. 1;
Fig. 3 is an outline of various parts of the embodiment of Fig. 1;
Fig. 4 illustrates further features of the embodiment of Fig. 1;
Figs. 5(A) to (L) are enlarged vertical cross-sectional views illustrating the embodiment of Fig. 1 in progressive steps of operation;
Figs. 6(A) to (C) are enlarged vertical cross-sectional views illustrating a second embodiment of the invention in progressive steps of operation;
Figs. 7(A) to (C) are enlarged vertical cross-sectional views illustrating a third embodiment of the invention in progressive steps of operation;
Figs. 8(A) to (C) illustrate B-H graphs for the lower electromagnet of the embodiment of Fig. 7;
Figs. 9(A) to (D) illustrate a fourth embodiment of the invention.

### DETAILED DESCRIPTION OF THE PREFERRED EMBODIMENT

Reference will now be made in detail to the preferred embodiments of the invention, examples of which are illustrated in the accompanying drawings.

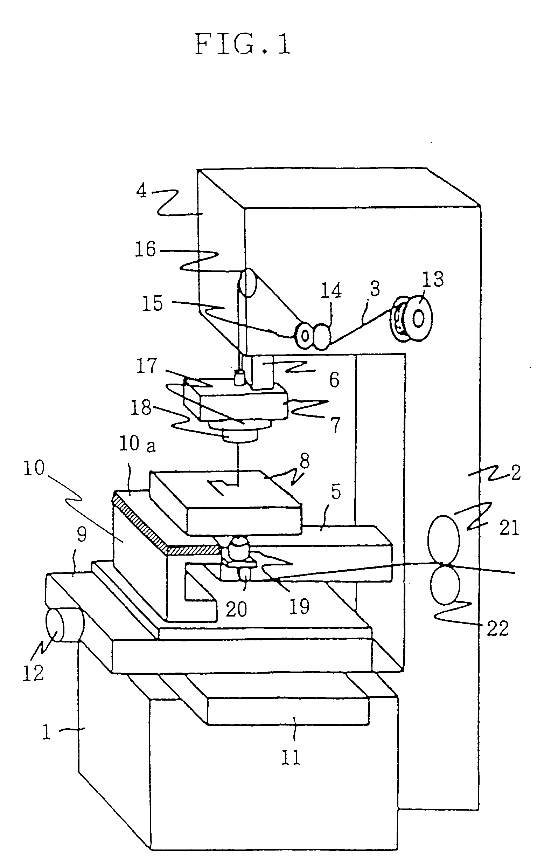

An electroerosion machine in the form of a wire-cut electric discharge machining device having an embodiment of the corepiece handling apparatus is shown in Fig. 1. The EDM machine, illustrated diagrammatically, comprises a column 2 upon which are attached a schematically depicted upper arm 4 and a lower arm 5. As explained below, each has a guide for guiding a wire electrode 3.

A head 6 and an upper wire guide block 7, affixed to the head 6, are located at the end of the upper arm 4 and are capable of moving up and down.

A bed 1, attached to the column 2, has a saddle 11 which moves along an x-axis under the control of a numerical controller. A table 9 is located above the saddle 11 and is driven along a y-axis by a motor 12 controlled by the numerical controller. A workpiece 8 is mounted into position on a pallet 10a. The pallet 10a is part of a mount 10 that is affixed to the table 9. By controlling the positions of the table 9 and saddle 11, the workpiece 8 is therefore movable in the x-y plane in order to cut a desired contour into the workpiece 8.

In the exemplary wire transport system depicted, the wire electrode 3 is fed from a feeding drum 13 to a pinch roller 14 and a brake roller 15, which imparts a prescribed tension to the wire electrode 3. After passing from a guide roller 16, the wire electrode 3 passes a conductivity piece (not shown in Fig. 1) and an upper position determining guide (not shown in Fig. 1) both contained within the upper wire guide block 7, through an upper ring-shaped electromagnet 17, a lower ring-shaped electromagnet 18 and then to the workpiece 8. As shown in Fig. 1, the upper electromagnet 17 is attached to the upper wire guide block 7. The lower electromagnet 18 is magnetically attached to the upper electromagnet 17.

After passing through the workpiece 8, the wire electrode 3 travels through a nozzle 19 which flushes the machining gap with machining fluid, to a lower position determining guide (not shown in Fig. 1), a lower conductivity piece (not shown in Fig. 1), and a guide roller 20 (not shown in Fig. 1). Thereafter, a transport structure such as a pinch roller 21 and a capstan roller 22 receive the wire electrode 3 from the guide roller 20 and discharge the used wire electrode 3 to a suitable waste receptacle.

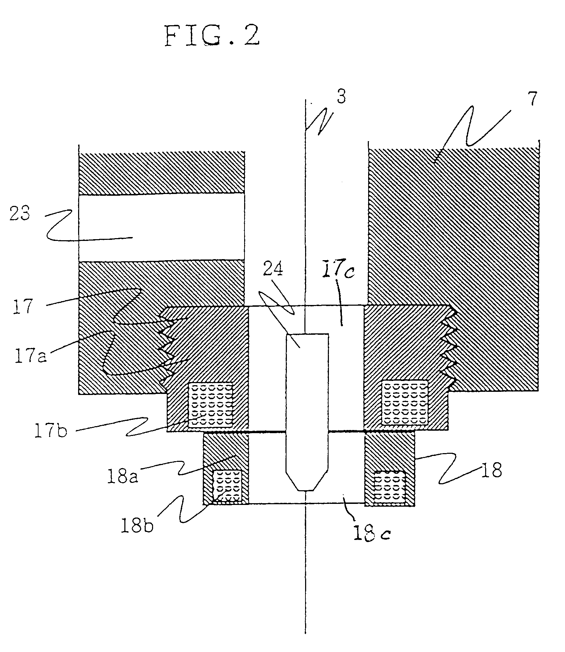

As shown in an enlarged vertical cross-sectional view in Fig. 2, the upper electromagnet 17 may, for example, be fixed to the upper wire guide block 7 by screwing the electromagnet 17 into the wire guide block 7. Alternatively, the upper electromagnet 17 may be attached by other methods, such as with the use of an inserting or fixing tool. Other methods of affixation which fall within the scope of this invention will also be apparent to the artisan. The upper electromagnet preferably comprises a ring-shaped magnetic material 17a within which a coil 17b is embedded. The coil 17b is wound along the periphery of the magnetic material 17a. The upper positioning guide 24 may be installed in the upper electromagnet 17 or the upper wire guide block 7.

The lower electromagnet 18 is also preferably comprised of a ring-shaped magnetic material 18a having a groove within which a coil 18b, wound along the periphery of the magnetic material 18a, is embedded. The lower electromagnet 18 may be magnetized to the upper electromagnet by supplying a current to the upper electromagnet's coil 17b. The lower electromagnet 18 also functions as an upper nozzle for spraying machining fluid which is introduced by a machining fluid supply passage 23, shown schematically and formed in the upper wire guide block 7 and through the axially aligned passages 17c and 18c of electromagnets 17 and 18 respectively. Also, by supplying a current to the coil 18b, the lower electromagnet 18 may be affixed to the workpiece 8, which is preferably comprised of a magnetic material.

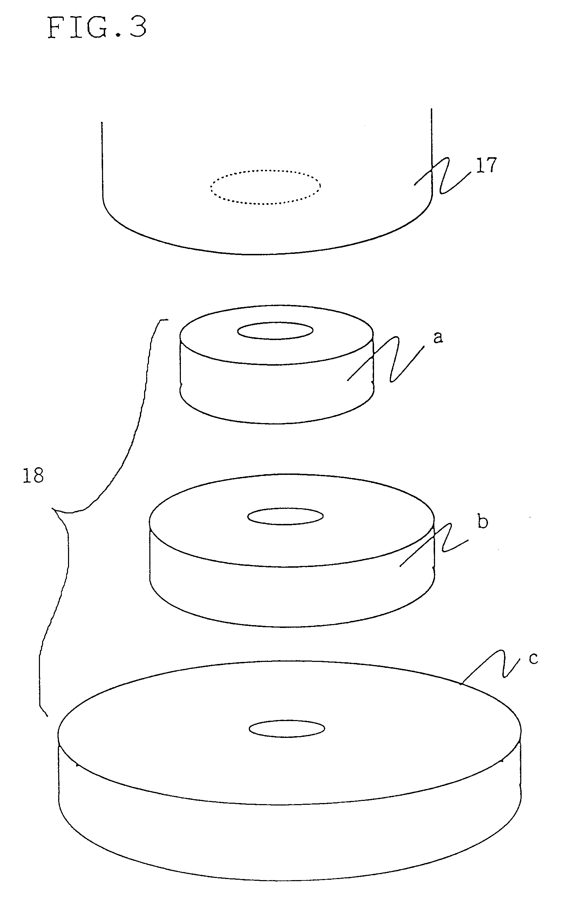

The lower electromagnet 18 illustrated in Figs. 1 and 2 is for use with relatively small corepieces. The lower electromagnet 18, however, may be replaced with another lower electromagnet which has an outer diameter suitable for relatively larger corepieces. For example, the outer diameter of the lower electromagnet 18 may vary from 6 mm to 100 mm, as shown in Fig. 3 by electromagnets A to C.

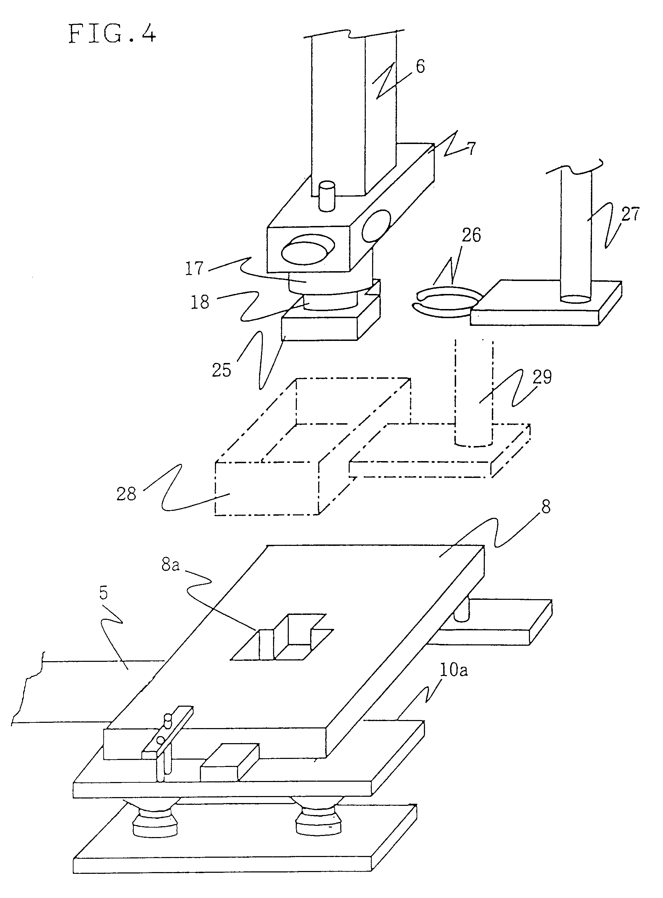

As shown diagramically in Fig. 4, a multi-functional arm 27 having manipulator members 26 may be used to remove the existing lower electromagnet 18 and exchange it with a different size lower electromagnet 18. A numerical controller may be used for the positioning of the multi-functional arm 27 and manipulator member 26.

After a corepiece 25 has been cut from the workpiece 8, the corepiece 25 is removed from the workpiece 8, thereby leaving a corresponding hole 8a, as shown in Fig. 4. A corepiece handling arm 29 having a recovery container 28 may then be positioned by, for example, either mechanically or by a worker underneath the corepiece 25. Once the recovery container 28 is in position, the lower electromagnet 18 is demagnetized so that the corepiece 25 drops into the recovery container 28.

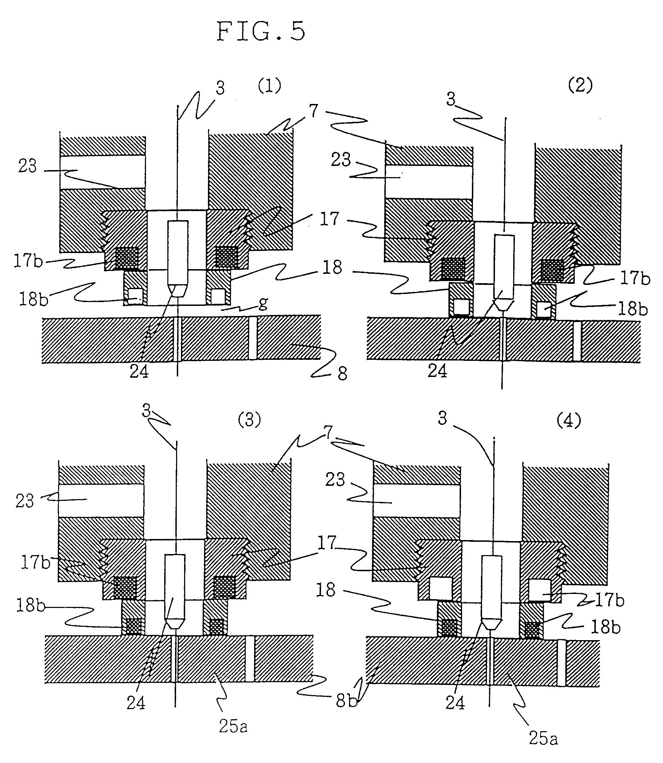

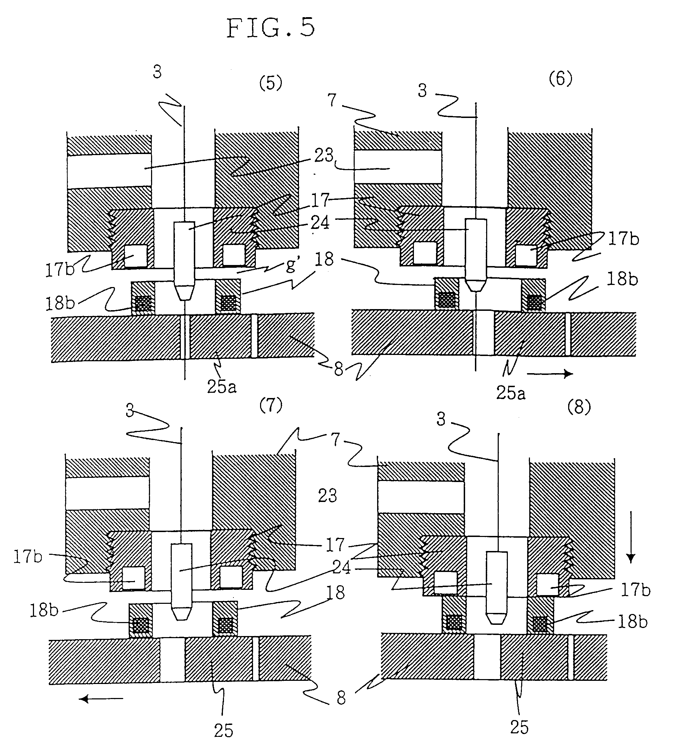

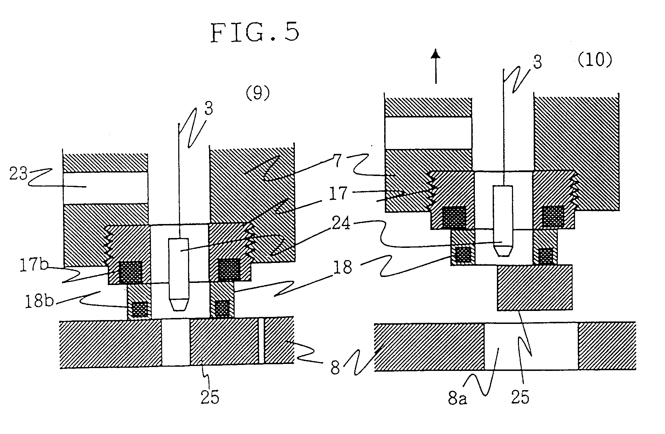

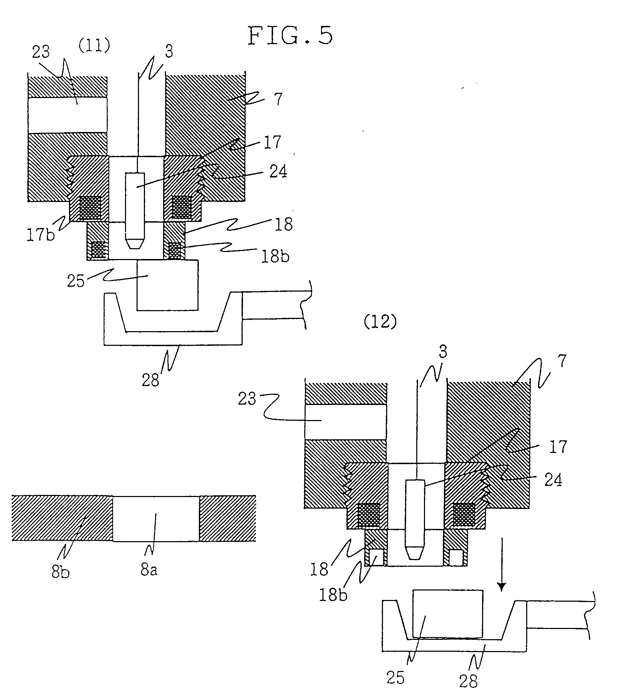

More detailed illustrations of the steps performed in machining and removing a corepiece are shown in Figs. 5(A) to (L). In these figures, when the coils 17b and 18b are depicted by lattice hatching, the coils 17b and 18b are magnetized. When the coils 17b and 18b are depicted by an empty box, the coils 17b and 18b are demagnetized.

After the upper electromagnet 17 is excited for holding the lower electromagnet 18, as shown in Fig. 5(A), the upper wire guide block 7 is lowered so that a gap g is formed between the lower electromagnet 18 and the workpiece 8. Machining may then occur by moving the workpiece in the x-y plane under the control of the numerical controller.

The machining of the workpiece progresses up to the point when a corepiece 25a is only slightly affixed to the workpiece 8. Then, as shown in Fig. 5(B), the head 6 and the upper wire guide block 7 are lowered until the lower electromagnet 18 comes in contact with the workpiece 8. The lower electromagnet 18 is positioned so that it straddles the corepiece 25a and the remaining portion of the workpiece 8.

Next, in Fig. 5(C), the lower electromagnet 18 is magnetized and, in Fig. 5(D), the upper electromagnet 17 is demagnetized. The head 6 and upper wire guide block 7 are then raised, thereby leaving the lower electromagnet 18 on the workpiece 8. As shown in Fig. 5(E), a gap g' is formed between the upper electromagnet 17 and the lower electromagnet 18.

Then, as shown in Fig. 5(F), machining may resume by moving the workpiece 8 and the lower electromagnet 18 relative to the wire electrode 3. When the machining has been completed, as shown in Fig. 5(G), the corepiece 25 is cut free from the workpiece 8. The core 25 does not drop away from the workpiece 8, however, because the lower electromagnet has been magnetized and has been placed to straddle the corepiece 25 and the workpiece 8. The workpiece 8 is then positioned so that the lower electromagnet 18 is centered with the upper electromagnet 17.

The upper wire guide block 7 is lowered until, as shown in Fig. 5(H), the upper electromagnet 17 comes in contact with the lower electromagnet 18. The coil 17b of the upper electromagnet 17 is then excited, as shown in Fig. 5(I), in order to attach the lower electromagnet 18 to the upper electromagnet 17.

Next, with reference to Fig. 5(J), the upper electromagnet 17 and lower electromagnet 18 are lifted thereby also lifting the corepiece 25 away from the workpiece 8. The recovery container 28 is placed underneath the core 25 in Fig. 5(K) and, as shown in Fig. 5(L), the lower electromagnet 18 is demagnetized to drop the corepiece 25 into the recovery container 28. The recovery container 28 may then be transferred to a location where the core 25 is removed.

The machining depicted and described in connection with Figs. 5(A) to (L) is suitable for relatively small or medium corepiece sizes. With larger corepiece sizes, however, after the corepiece 25 has been cut, as shown in Fig. 5(G), the upper wire guide block 7 may then be raised relative to the workpiece 8. The pallet 10a (Fig. 4), having the workpiece 8 with the corepiece 25 and lower electromagnet 18, may then be removed from the mount 10 and transferred to a special treatment location. This may be performed, for example, by specially installed robotic hands or various other semi-automatic devices. At the special treatment location, the lower electromagnet 18 is demagnetized to drop the core 25 away from the workpiece 8. The lower electromagnet 18 is then returned to the upper electromagnet 17 by energizing the upper electromagnet 17.

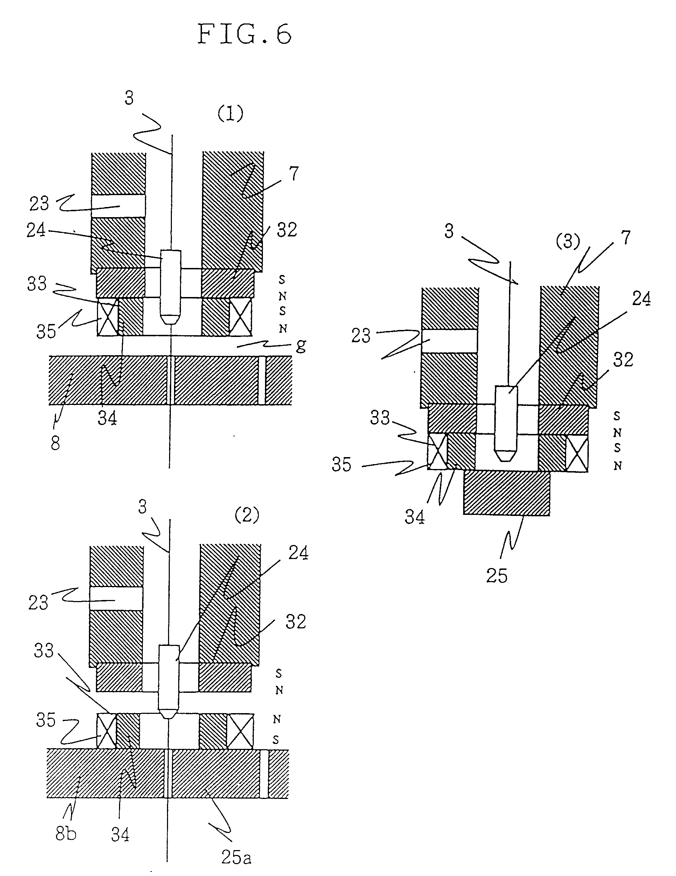

A second embodiment of the invention is illustrated in Figs. 6(A) to (C). In this embodiment, a ring-shaped permanent magnet 32, preferably comprised of a ferromagnetic material such as Sm-Co, is attached to the upper wire guide block 7 in place of the upper electromagnet 17. Because the permanent magnet 32 is used, the cable treatment, magnetic excitation and de-excitating control are now unnecessary. A lower electromagnet 33 preferably comprises a coil 35 wrapped around a core 34 formed of a ferrite material.

As shown in Fig. 6(A), the lower electromagnet 33 is attached to the permanent magnet 34 without supplying a current to the coil 35. Alternatively, a magnetizing current may be passed through the coil 35 to magnetize the core 34 in the forward direction. Machining of the workpiece 8 is then performed with a gap g existing between the workpiece 8 and lower electromagnet 33.

Next, with reference to Fig. 6(B), the electromagnet 33 is positioned to straddle the corepiece 25a and the workpiece 8 and then dropped onto the workpiece 8 by creating a reverse current in the coil 35. The machining is resumed to completely cut the corepiece 25a away from the workpiece 8, thus creating the corepiece 25. Because of the positioning of the electromagnet 33, the corepiece 25 is prevented from dropping away from the workpiece 8.

Once the corepiece 25 is formed, the upper wire guide block 7 is lowered until the permanent magnet 32 comes in contact with the electromagnet 33. The magnetization of the electromagnet is then reversed back to the forward direction by passing current through the coil 35 in the appropriate direction. The corepiece 25 is drawn away from the workpiece 8 by raising the wire guide block 7, permanent magnet 32, and electromagnet 33. Since a permanent magnet is employed, the cable handling is simplified.

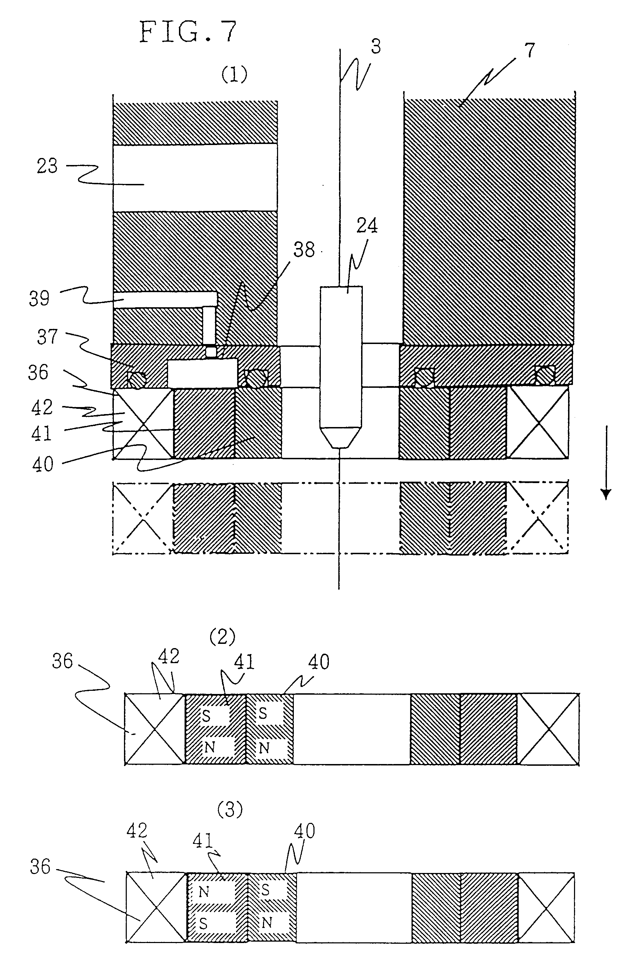

Figs. 7(A) to (C) illustrate a third embodiment of the invention, which uses a vacuum to hold the lower electromagnet 36 to the upper wire guide block 7. As shown in Fig. 7(A), a preferably circular cavity 38 is formed in a ring-shaped block 37, which is attached to the lower surface of the upper wire guide block 7. A hose contact gate 39 is connected to the cavity 38. By engaging the ring-shaped block 37 with the lower electromagnet 36 and then discharging the air within the cavity 38 through the hose contact gate 39 to a hose with the use of a suitable vacuum pump, the lower electromagnet 36 is attached to the ring-shaped block 37. In order to remove the lower electromagnet 36 from the ring-shaped block 37, as shown by the broken lines in the figure, the cavity 38 is connected to an outside supply of air by a valve operation, thereby removing the vacuum within the cavity 38.

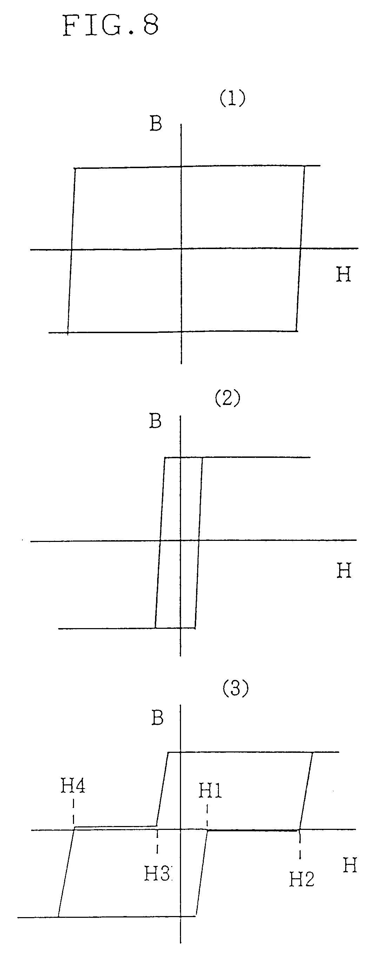

With the embodiment of Figs. 7(A) to (C), the lower electromagnet 36, the lower electromagnets 18, or the lower electromagnet 33 may be used instead. The lower electromagnet 36 is comprised of a relatively hard magnetic ferrite 41 having a B-H curve such as the one depicted in Fig. 8(B). The ferrite 41 is bonded to the outside of a permanent magnet 40, comprised of a ferromagnetic material such as Sm-Co and which has a B-H curve such as the one depicted in Fig. 8(A). A coil 42 is wound onto the perimeter of the ferrite 41. The resultant electromagnet 36 has a B-H curve such as the one shown in Fig. 8(C).

As shown in Fig. 7(B), the lower electromagnet 36 magnetizes the ferrite 41 with the same polarity as the permanent magnet 40 so that the lower electromagnet 36 can be affixed to the workpiece 8. When the lower electromagnet 36 magnetizes the ferrite 41 with the opposite polarity as the permanent magnet 40, as shown in Fig. 7(C), the lower electromagnet 36 is unable to bond with the workpiece 8.

According to this embodiment of the invention, it is not always necessary to create an exciting current. After a current for demagnetizing the coil 42 is created, the magnetization of the ferrite 41 changes to that shown in Figs. 7(B) or (C). If the current corresponds to a range of the magnetic field H1-H2 or H3-H4 of Fig. 8(C), the lower electromagnet 36 becomes demagnetized and the setting of the excitation current is roughly created. The lower electromagnet 36 may also be used as an upper electromagnet in another embodiment.

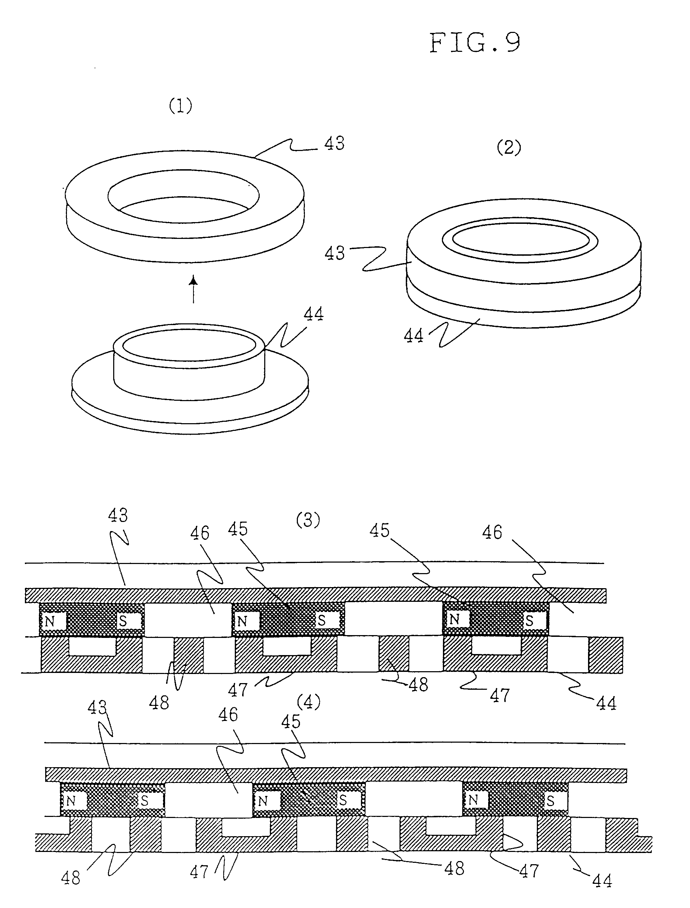

Figs. 9(A) to (D) illustrate a fourth embodiment of the invention using a different magnet from the lower electromagnet of the prior embodiment. The magnet of Figs 9(A)-(D) preferably comprises a lower ring 44 which is connected to an upper ring 43 so as to be relatively freely rotatable. The lower ring 44 and upper ring 43 have essentially the same diameter and cannot be separated by a peripheral ring.

As shown in Figs. 9(C) and (D), a plurality of permanent magnets 45, magnetized in the same direction along the periphery of the upper ring 43, are alternated with a plurality of nonmagnetic materials 46 at equal intervals. In the lower ring 44, a plurality of magnetic materials 47 are magnetized in the same direction along the periphery of the lower ring and have an upward U shaped cross-section. The magnetic materials 47 are alternated at equal intervals with a plurality of magnetic materials 48 having a square cross-section. The magnetic material 47 in the lower ring 44 has the same width and magnetization as the permanent magnet 45 in the upper ring 43.

A magnetic closed circuit is formed when the permanent magnet 45 is positioned with the U-shaped magnetic material 47 as shown in Fig. 9(C). In this state, the attraction ability of the magnet is decreased. When the permanent magnet 45 is rotated relative to the U-shaped magnetic material 47 to the position shown in Fig. 9(D), however, the magnetic circuit is opened and a workpiece 8 comprised of a magnetic material can be bonded between the magnetic materials 47 and 48. Since the manner in which the upper ring 43 rotates relative to the lower ring 44 is not essential to this embodiment, the magnet of this embodiment may also be used in parts that are adversely influenced by the wire electrode 3.

The foregoing description of a preferred embodiment of the invention has been presented for purposes of illustration and description. It is not intended to be exhaustive or to limit the invention to the precise form disclosed, and obviously many modifications and variations are possible in light of the above teaching.

For example, the semi-hard or hard magnetic materials of electromagnets 18 and 34 may be permanently magnetized by magnetizing and exciting the respective coils in order to attach them to the workpiece 8. Then, when the electromagnets 18 and 34 need to be separated from the workpiece 8, the electromagnets 18 and 34 may be demagnetized by a reverse excitation and demagnetization.

Also, in Fig. 3, the shape of the lower electromagnet 18 has been illustrated as corresponding to the shape of the core. Alternatively, rather than being in the shape of a hollow cylinder, the lower electromagnet 18 may be formed so as to optimally bond with the core 25 and the workpiece 8.

Further, as shown in Fig. 5(B), the lower electromagnet 18 comes into contact with the workpiece 8 by dropping the upper wire guide block 7. Instead, when the gap g is small, the upper electromagnet 17 may simply be demagnetized without needing to lower the upper wire guide block 7. Since the machining cannot be interrupted without causing an adverse influence on the machining precision, even with taper cutting, the precision is preserved by not lowering the upper wire guide block 7.

With the invention, the lower electromagnet for the core treatment may be exchanged according to the size of the core. Thus, the EDM machine may operate to produce a variety of core sizes, thereby improving the efficiency of the machine. Additionally, automated and unmanned machining can be achieved.

The embodiments were chosen and described in order to best explain the principles of the invention and its practical application to thereby enable others skilled in the art to best utilize the invention in various embodiments and with various modifications as are suited to the particular use contemplated. It is intended that the scope of the invention only be limited by the claims appended hereto.

## Claims

1. A wire-cut electroerosion machine for contour machining a workpiece (8) using a wire electrode (3), said wire electrode being tensioned between a first wire guide block (7) and a wire guide as it passes through a working zone of said electroerosion machine, wherein said contour machining produces a corepiece (25) from said workpiece (8), said electroerosion machine further including magnetizable means (17) fixed to said guide block (7) for handling said corepiece (25), wherein
a first holding means (18) positioned adjacent the workpiece (8), and comprising a magnetic material (18a) which can be selectively magnetized or demagnetized;
said magnetizable means constituting a second holding means (17) for holding said first holding means (18);
means (17b, 18b) for detaching said first holding means (18) from said second holding means (17) and for attaching said first holding means to a workpiece (8) to thereby maintain the position of said corepiece (25) relative to said workpiece (8) while said corepiece (25) is cut from said workpiece (8) during said contour machining; caracterized by
said first and second holding means (17, 18) being disc-shaped and each including a passage (17c, 18c) therethrough, said passages, when aligned, permitting passage of said electrode (3) therethrough.

2. The electroerosion machine of claim 1, wherein said first holding means (18) is attached coaxially with said second holding means (17), wherein machining fluid is introduced to the working zone through said passages (17c, 18c).

3. The electroerosion machine of claim 2, wherein said passages (17c, 18c), when axially aligned, form a nozzle for introducing machining fluid to the working zone.

4. The electroerosion machine of claim 2, wherein the passages in said first and second holding means (17, 18) are axially aligned and form a nozzle for introducing machining fluid to the working.

5. The electroerosion machine of claim 1, wherein said first and second holding means (17, 18) are electromagnets and said second holding means (17) includes a coil (17b), wherein said coil of said second holding means (17) may be energized to magnetize and attach said first holding means (18) to said second holding means (17) and de-energized to demagnetize and detach said first holding means from said second holding means.

6. The electroerosion machine of claim 1, wherein said first holding means (18) comprises a ring-shaped permanent magnet (35) having a coil wound around its periphery for magnetizing or demagnetizing said permanent magnet.

7. The electroerosion machine of claim 1, wherein said second holding means includes a vacuum apparatus (38, 39) operable when said vacuum is actuated to attach said first holding means to said second holding means and when said vacuum is deactivated to detach said first holding means from said second holding means.

8. The electroerosion machine of claim 1, wherein said second holding means (17) comprises a first annular member (43) having a series of spaced-apart permanent magnets (45) with the spaces between said permanent magnets being at least partially-filled with a non-magnetic material (46);
said first holding means (18) comprises a second annular member (44) having a series of spaced-apart permanent magnets (47) positioned along its periphery and a series of spaced-apart magnetic material inserts (48) positioned between said permanent magnets;
whereby the spaced-apart magnets in said first and second holding means are positioned to form a magnetic open circuit for attaching said first holding means (18) to said corepiece (25) when each of said permanent magnets (47) in said first annular (18) member is positioned adjacent to both a portion of one of said permanent magnets (45) in said second annular member (43) and a portion of one of said permanent magnet inserts and a magnetic closed circuit for detaching said first holding means from said corepiece is formed when each of said permanent magnets in said first annular member is vertically aligned with one of said permanent magnets in said second annular member.

9. The electroerosion machine of claim 1, wherein said first holding means (18) is selected from a plurality of holding means which vary in size according to the size of the corepiece formed (Fig. 3) and said core handling apparatus further comprises an exchanger for removing the first holding means and installing a different first holding means appropriate to the size of the corepiece to be formed.

10. A method of handling a corepiece (25) cut from a workpiece (8) using a wire-cut electroerosion machine according to claim 1 having a wire guide block (7) comprising a guide member (24) for guiding a wire electrode (3) as it passes through a working zone of said machine, said method comprising the steps of:
attaching a first holding means (17) to said wire guide block;
attaching a second holding means (18), comprising a magnetic material for selectively magnetizing said first holding means, to said first holding means;
machining a contour in a workpiece (8) by electroerosion;
detaching said second holding means (18) from said first holding means (17) and positioning said second holding means (18) to straddle said workpiece (8) and said corepiece (25); and
resuming said machining of said workpiece until said corepiece (25) is cut from said workpiece (8);
whereby said second holding means (18) holds said corepiece (25) in a stable position relative to said workpiece (8) when said corepiece is cut free from said workpiece.

11. The method of claim 10 further comprising the step of removing said corepiece (25) from said workpiece (8) by raising said second holding means (18) relative to said workpiece.

12. The method of claim 10 wherein:
said first and second holding means (17, 18) are comprised of electromagnets and said first and second holding means include respective coils (17b, 18b) for energizing said electromagnets;
said step of attaching said second holding means (18) to said first holding means (17) further includes the step of energizing said coil (17b) of said first holding means; and
said steps of detaching said second holding means (18) from said first holding means (17) and attaching said second holding means (18) to said corepiece (25) and workpiece (8) further comprises the steps of de-energizing said coil (17b) of said first holding means (17) and energizing said coil (18b) of said second holding means (18).

13. The method of claim 10 wherein:
said step of attaching said second holding means (18) to said first holding means (17) further includes the step of creating a vacuum; and
said steps of detaching said second holding means (18) from said first holding means (17) and attaching said second holding means to said corepiece (25) and workpiece (8) further comprises the steps of removing said vacuum and energizing a coil (18b) of said second holding means (18).

14. The method of claim 10, wherein said step of attaching said second holding means (18) further comprises the steps of:
removing an existing second holding means (18) from said first holding means (17);
selecting an optimal second holding means (18a - 18c) in accordance with a size of the corepiece (25) to be formed; and
placing said optimal second holding means (18a - 18c) onto said first holding means (18).

## Patentansprüche

1. Drahterosionsmaschine zum Ausschneiden der Konturen eines Werkstücks (8) mittels einer Drahtelektrode (3), wobei die Drahtelektrode beim Durchlaufen des Bearbeitungsbereichs der Drahterosionsmaschine zwischen einem ersten Drahtführungsblock (7) und einer Drahtführung gespannt ist und beim Ausschneiden ein Kernstück (25) des Werkstücks entsteht, und wobei die Funkenerosionsmaschine weiterhin am Führungsblock (7) befestigte Magnetmittel (17) zur Behandlung des Kernstücks (25) aufweist, gekennzeichnet durch
ein erstes Haltemittel (18), welches am Werkstück (8) anliegt und ein magnetisches Material (18a) aufweist, das wahlweise magnetisch oder nichtmagnetisch gemacht werden kann,
wobei das genannte Magnetmittel ein zweites Haltemittel (17) darstellt, welches das erste Haltemittel (18) festhält;
Mittel (17b, 18b) zum Lösen des ersten Haltemittels (18) vom zweiten Haltemittel (17) und zur Verbindung des ersten Haltemittels mit einem Werkstück (8), um auf diese Weise den Kern (25) in seiner Lage zum Werkstück (8) zu halten, während der Kern (25) beim Ausschneiden des Werkstücks (8) aus dem Werkstück ausgeschnitten wird,
wobei das erste und das zweite Haltemittel (17, 18) scheibenförmig ausgebildet sind und je eine Öffnung (17c, 18c) aufweisen und die Öffnungen, wenn sie aufeinander ausgerichtet sind, den Durchtritt der Elektrode (3) gestatten.

2. Funkenerosionsmaschine nach Anspruch 1, dadurch gekennzeichnet, dass das erste Haltemittel (18) koaxial zum zweiten Haltemittel (17) angebracht ist, wobei dem Bearbeitungsbereich durch die Öffnungen (17c, 18c) Bearbeitungsflüssigkeit zugeführt wird.

3. Funkenerosionsmaschine nach Anspruch 2, dadurch gekennzeichnet, dass die Öffnungen (17c, 18c), wenn sie axial aufeinander ausgerichtet sind, eine Austrittsöffnung für die Zufuhr von Bearbeitungsflüssigkeit zum Bearbeitungsbereich bilden.

4. Funkenerosionsmaschine nach Anspruch 2, dadurch gekennzeichnet, dass die Öffnungen im ersten und zweiten Haltemittel (17, 18) axial aufeinander ausgerichtet sind und eine Austrittsöffnung für die Zufuhr von Bearbeitungsflüssigkeit zur Bearbeitung bilden.

5. Funkenerosionsmaschine nach Anspruch 1, dadurch gekennzeichnet, dass das erste und das zweite Haltemittel (17, 18) Elektromagneten sind und das zweite Haltemittel (17) eine Spule (17b) aufweist, wobei die Spule des zweiten Haltemittels (17) erregt bzw. abgeschaltet werden kann, um das erste Haltemittel (18) zu magnetisieren und mit dem zweiten Haltemittel (17) zu verbinden bzw. um das erste Haltemittel zu entmagnetisieren und vom zweiten Haltemittel zu lösen.

6. Funkenerosionsmaschine nach Anspruch 1, dadurch gekennzeichnet, dass das erste Haltemittel (18) einen ringförmigen Permanentmagneten (35) aufweist, dessen Umfang mit einer Spule umwickelt ist, um den Permanentmagneten magnetisch bzw. nichtmagnetisch zu machen.

7. Funkenerosionsmaschine nach Anspruch 1, dadurch gekennzeichnet, dass das zweite Haltemittel eine Vakuumvorrichtung (38, 39) aufweist, mit welcher bei Vorhandensein des Vakuums das erste Haltemittel mit dem zweiten Haltemittel verbindbar und bei Nichtvorhandensein des Vakuums das erste Haltemittel vom zweiten Haltemittel lösbar ist.

8. Funkenerosionsmaschine nach Anspruch 1, dadurch gekennzeichnet, dass das zweite Haltemittel (17) einen ersten Ring (43) mit einer Anzahl von Permanentmagneten (45) aufweist, die durch Zwischenräume getrennt sind, wobei die Zwischenräume zwischen den Permanentmagneten mindestens teilweise mit einem nichtmagnetischen Material (46) ausgefüllt sind;
dass das erste Haltemittel (18) einen zweiten Ring (44) aufweist, auf dessen Umfang eine Anzahl von Permanentmagneten mit Zwischenräumen sowie eine Anzahl von dazwischenliegenden Einsätzen (48) aus magnetischem Material angeordnet sind;
wobei die im ersten und im zweiten Haltemittel verteilten Magnete derart angeordnet sind, dass sie einen offenen magnetischen Kreis bilden, um das erste Haltemittel (18) mit dem Kernstück (25) zu verbinden, wenn jeder Permanentmagnet (47) des ersten Rings (18) sowohl einen Teil eines Permanentmagneten (45) des zweiten Rings (43) und einen Teil eines Permanentmagnet-Einsatzes berührt, und einen geschlossenen magnetischen Kreis zum Lösen des ersten Haltemittels vom Kernstück, wenn jeder Permanentmagnet des ersten Rings mit einem Permanentmagneten des zweiten Rings vertikal ausgerichtet ist.

9. Funkenerosionsmaschine nach Anspruch 1, dadurch gekennzeichnet, dass das erste Haltemittel (18) aus einer Anzahl Haltemittel ausgewählt wird, deren Grösse von der Grösse des entstehenden Kernstücks (Fig. 3) abhängt, und die Vorrichtung zur Behandlung des Kerns weiterhin einen Wechsler zum Entfernen des ersten Haltemittels und zum Einsetzen eines anderen, der Grösse des entstehenden Kernstücks entsprechenden ersten Haltemittels aufweist.

10. Verfahren zur Behandlung eines Kernstücks (25), das mit Hilfe einer Drahterosionsmaschine nach Anspruch 1, welche einen Drahtführungsblock (7) mit einem Führungsorgan (24) zur Führung der Drahtelektrode beim Durchlaufen des Bearbeitungsbereichs der Maschine aufweist, aus einem Werkstück (8) ausgeschnitten wird, wobei das Verfahren folgende Schritte umfasst:
Anbringen eines ersten Haltemittels (17) am Drahtführungsblock;
Anbringen eines zweiten Haltemittels (18) mit einem magnetischen Material zur wahlweisen Magnetisierung des ersten Haltemittels am ersten Haltemittel;
Ausschneiden der Konturen eines Werkstücks (8) durch Funkenerosion;
Lösen des zweiten Haltemittels (18) vom ersten Haltemittel (17) und Positionieren des zweiten Haltemittels (18) derart, dass es rittlings auf dem Werkstück (8) und dem Kernstück (25) liegt; und
Weiterbearbeitung des Werkstücks, bis das Kernstück (25) aus dem Werkstück (8) ausgeschnitten ist;
wobei des zweite Haltemittel (18) das Kernstück (25) während dem Ausschneiden des Kernstücks aus dem Werkstück in stabiler Lage zum Werkstück hält.

11. Verfahren nach Anspruch 10, gekennzeichnet durch den weiteren Schritt, dass das Kernstück (25) durch Anheben des zweiten Haltemittels (18) vom Werkstück aus dem Werkstück (8) entfernt wird.

12. Verfahren nach Anspruch 10, dadurch gekennzeichnet, dass:
das erste und das zweite Haltemittel (17, 18) aus Elektromagneten bestehen und jeweils eine Spule (17b, 18b) zur Erregung der Elektromagnete aufweisen;
beim Anbringen des zweiten Haltemittels (18) am ersten Haltemittel (17) weiterhin die Spule (17b) des ersten Haltemittels erregt wird;
beim Lösen des zweiten Haltemittels (18) vom ersten Haltemittel (17) und beim Anbringen des zweiten Haltemittels (18) am Kernstück (25) und am Werkstück (8) weiterhin die Spule (17b) des ersten Haltemittels (17) abgeschaltet und die Spule (18b) des zweiten Haltemittels (18) erregt werden.

13. Verfahren nach Anspruch 10, dadurch gekennzeichnet, dass
beim Anbringen des zweiten Haltemittels (18) am ersten Haltemittel (17) weiterhin ein Vakuum erzeugt wird; und dass
beim Lösen des zweiten Haltemittels (18) vom ersten Haltemittel (17) und beim Anbringen des zweiten Haltemittels am Kernstück (25) und am Werkstück (8) weiterhin das Vakuum aufgehoben und eine Spule (18b) des zweiten Haltemittels (18) erregt werden.

14. Verfahren nach Anspruch 10, dadurch gekennzeichnet, dass beim Anbringen des zweiten Haltemittels (18) weiterhin
ein vorhandenes zweites Haltemittel (18) vom ersten Haltemittel (17) entfernt wird;
je nach der Grösse des auszuschneidenden Kernstücks (25) ein optimales zweites Haltemittel (18a - 18c) ausgewählt wird; und
dieses optimale zweite Haltemittel (18a - 18c) auf das erste Haltemittel (18) gebracht wird.

## Revendications

1. Machine d'étincelage par fil pour découper les contours d'une pièce à usiner (8) au moyen d'un filélectrode (3), ledit fil-électrode étant tendu entre un premier bloc de guidage (7) et une guide-fil alors qu'il passe par la zone d'usinage de la machine d'étincelage, et qu'un noyau (25) de la pièce à usiner (8) est produit au cours du découpage, la machine d'étincelage par électroérosion présentant en plus des moyens magnétisables (17) fixés au bloc de guidage (7) afin de manipuler ledit noyau (25), caractérisé par
un premier moyen de retenue (18) adjacent à la pièce à usiner (8) et comprenant une matière magnétique (18a) pouvant sélectivement être magnétisée ou démagnétisée,
ledit moyen magnétisable constituant un deuxième moyen de retenue (17) pour retenir le premier moyen de retenue (18);
des moyens (17b, 18b) pour détacher le premier moyen de retenue (18) du deuxième moyen de retenue (17) et pour attacher le premier moyen de retenue à la pièce à usiner (8) afin de maintenir ainsi la position du noyau (25) par rapport à la pièce à usiner (8) alors que le noyau (25) est découpé de la pièce à usiner (8) au cours dudit découpage,
le premier et le deuxième moyen de retenue (17, 18) étant en forme de disque et présentant chacun un passage (17c, 18c), lesdits passages permettant le passage de l'électrode lorsqu'ils sont alignés.

2. Machine d'usinage par électroérosion selon la revendication 1, caractérisée en ce que le premier moyen de retenue (18) est monté coaxialement par rapport au deuxième moyen de retenue (17), du fluide d'usinage étant introduit dans la zone d'usinage par lesdits passages (17c, 18c).

3. Machine d'usinage par électroérosion selon la revendication 2, caractérisée en ce que les passages (17c, 18c), lorsqu'ils sont axialement alignés, forment une tuyère pour introduire du fluide d'usinage à la zone d'usinage.

4. Machine d'usinage par électroérosion selon la revendication 2, caractérisée en ce que le premier et le deuxième moyen de retenue (17, 18) sont axialement alignés et forment une tuyère pour l'introduction de fluide d'usinage à l'usinage.

5. Machine d'usinage par électroérosion selon la revendication 1, caractérisée en ce que le premier et le deuxième moyen de retenue (17, 18) sont des électro-aimants et que le deuxième moyen de retenue (17) comporte une bobine (17b), la bobine du deuxième moyen de retenue (17) pouvant être excitée afin de magnétiser le premier moyen de retenue (18) et l'attacher au deuxième moyen de retenue (17) et désexcité afin de démagnétiser le premier moyen de retenue et le détacher du deuxième moyen de retenue.

6. Machine d'usinage par électroérosion selon la revendication 1, caractérisée en ce que le premier moyen de retenue (18) comporte un aimant permanent annulaire (35) sur la périphérie duquel est enroulée une bobine afin de magnétiser ou démagnétiser ledit aimant permanent.

7. Machine d'usinage par électroérosion selon la revendication 1, caractérisée en ce que le deuxième moyen de retenue comporte un dispositif (38, 39) de vide servant à attacher le premier moyen de retenue au deuxième moyen de retenue lorsque le vide est activé et à détacher le premier moyen de retenue du deuxième moyen de retenue lorsque le vide est désactivé.

8. Machine d'usinage par électroérosion selon la revendication 1, caractérisée en ce que le deuxième moyen de retenue (17) comporte un premier élément annulaire (43) sur la périphérie duquel est disposée une série d'aimants permanents (45) espacés, les espaces entre ces aimants permanents étant au moins partiellement occupés par une matière non-magnétique (46);
et que le premier moyen de retenue (18) comporte un deuxième élément annulaire (44) sur la périphérie duquel est disposée une série d'aimants permanents (47) espacés entre lesquels est disposée une série d'insertions (48) espacées en une matière magnétique;
les aimants espacés du premier et du deuxième moyen de retenue étant positionnés de manière à former un circuit magnétique ouvert pour attacher le premier moyen de retenue (18) au noyau (25) lorsque chacun des aimants permanents (47) du premier élément annulaire (18) est en contact avec une partie d'un des aimants permanents (45) du deuxième élément annulaire (43) et avec une partie d'un des aimants permanents insérés, et un circuit magnétique fermé pour détacher le premier moyen de retenue du noyau étant formé lorsque chacun des aimants permanents du premier élément annulaire est verticalement aligné sur un des aimants permanents du deuxième élément annulaire.

9. Machine d'usinage par électroérosion selon la revendication 1, caractérisée en ce que le premier moyen de retenue (18) est choisi parmi un nombre de moyens de retenue dont la grandeur varie en fonction de la grandeur du noyeau formé (Fig. 3), et que le dispositif de maniement comporte en plus un changeur pour retirer le premier moyen de retenue et installer un premier moyen de retenue différent et approprié à la grandeur du noyau qui sera formé.

10. Procédé de maniement d'un noyau (25) découpé d'une pièce à usiner (8) au moyen d'une machine d'usinage par électroérosion selon la revendication 1, comprenant un bloc de guidage (7) avec un élément de guidage (24) pour guider un fil-électrode (3) alors qu'il passe à travers la zone d'usinage de la machine, ledit procédé comprenant les étapes suivantes:
attache d'un premier moyen de retenue (17) au bloc de guidage;
attache d'un deuxième moyen de retenue (18), comprenant une matière magnétique servant à séléctivement magnétiser le premier moyen de retenue, audit premier moyen de retenue;
découpage d'un contour dans une pièce à usiner (8) par électroérosion;
détachement du deuxième moyen de retenue (18) du premier moyen de retenue (17) et positionnement du deuxième moyen de retenue (18) de façon à chevaucher la pièce à usiner (8) et le noyau (25); et
continuation de l'usinage de la pièce à usiner jusqu'à ce que le noyau (25) soit découpé de la pièce à usiner (8);
le deuxième moyen de retenue (18) retenant le noyau (25) dans une position stable par rapport à la pièce à usiner (8) pendant que le noyau est découpé de la pièce à usiner.

11. Procédé selon la revendication 10, caractérisé en ce qu'il comprend en plus l'étape d'enlever le noyau (25) de la pièce à usiner (8) en élevant le deuxième moyen de retenue (18) par rapport à la pièce à usiner.

12. Procédé selon la revendication 10, caractérisé en ce que:
le premier et le deuxième moyen de retenue (17, 18) sont constitués d'électro-aimants, et que le premier et le deuxième moyen de retenue comportent une bobine (17b, 18b) chacun afin d'exciter lesdits électro-aimants;
l'étape d'attacher le deuxième moyen de retenue (18) au premier moyen de retenue (17) comprend en plus l'étape d'exciter la bobine (17b) du premier moyen de retenue; et que
les étapes de détacher le deuxième moyen de retenue (18) du premier moyen de retenue (17) et d'attacher le deuxième moyen de retenue (18) au noyau (25) et à la pièce à usiner (8) comprennent en plus les étapes de désexciter la bobine (17b) du premier moyen de retenue (17) et d'exciter la bobine (18b) du deuxième moyen de retenue (18).

13. Procédé selon la revendication 10, caractérisé en ce que:
l'étape d'attacher le deuxième moyen de retenue (18) au premier moyen de retenue (17) comprend en plus l'étape de créer un vide; et que
les étapes de détacher le deuxième moyen de retenue (18) du premier moyen de retenue (17) et d'attacher le deuxième moyen de retenue au noyau (25) et à la pièce à usiner (8) comprennent en plus les étapes d'annuler ledit vide et d'exciter une bobine (18b) du deuxième moyen de retenue (18).

14. Procédé selon la revendication 10, caractérisé en ce que l'étape d'attacher le deuxième moyen de retenue (18) comprend en plus les étapes suivantes:
enlèvement d'un deuxième moyen de retenue (18) existant du premier moyen de retenue (17);
sélection d'un deuxième moyen de retenue optimal (18a - 18c) selon la grandeur du noyau (25) à découper; et
placement dudit deuxième moyen de retenue optimal (18a - 18c) sur le premier moyen de retenue (18).
